## Europäisches Patentamt
## European Patent Office
## Office européen des brevets

(19)

(11) **EP 1 222 018 B1**

(12) **FASCICULE DE BREVET EUROPEEN**

(45) Date de publication et mention
de la délivrance du brevet:
**04.06.2003 Bulletin 2003/23**

(51) Int Cl.⁷: **B01F 17/00**

(21) Numéro de dépôt: **00968028.1**

(86) Numéro de dépôt international:
**PCT/FR00/02849**

(22) Date de dépôt: **12.10.2000**

(87) Numéro de publication internationale:
**WO 01/028673 (26.04.2001 Gazette 2001/17)**

(54) **UTILISATION DE GALACTOMANNANES COMME AGENT EMULSIFIANT**

VERWENDUNG VON GALACTOMANNANE ALS EMULGIERMITTEL

USE OF GALACTOMANNANS AS AN EMULSIFYING AGENT

(84) Etats contractants désignés:
**AT BE CH CY DE DK ES FI FR GB GR IE IT LI LU
MC NL PT SE**

(30) Priorité: **15.10.1999 FR 9912903**

(43) Date de publication de la demande:
**17.07.2002 Bulletin 2002/29**

(73) Titulaire: **RHODIA CHIMIE
92512 Boulogne Billancourt Cedex (FR)**

(72) Inventeurs:
 • **VASLIN, Sophie
 F-92210 Saint-Cloud (FR)**
 • **LYOTHIER, Arnaud
 F-93300 Aubervilliers (FR)**

 • **GORON, Eric
 CH-8280 Kreuzlingen (CH)**
 • **DELPRATO, François
 F-95310 Saint-Ouen l'Aumone (FR)**
 • **COUTANT, Antoine
 Singapore 259394 (SG)**

(74) Mandataire: **Dubruc, Philippe et al
Rhodia Services,
Direction de la Propriété Industrielle,
40, rue de la Haie-Coq
93306 Aubervilliers Cedex (FR)**

(56) Documents cités:
 **FR-A- 1 499 666        FR-A- 2 766 849**

## Description

La présente invention a pour objet l'utilisation d'au moins un galactomannane dont le rapport entre les motifs mannose/galactose (M/G) est au plus égal à environ 5 et présente une masse moléculaire comprise entre 2000 et $2.10^6$ g/mole comme agent émulsifiant d'une dispersion.

Elle concerne également l'utilisation d'au moins un galactomannane de type ci-dessus, comme agent émulsifiant dans des compositions destinées aux domaines de la cosmétique, de l'alimentaire, de l'agrochimie, des formulations industrielles, de la détergence, pharmaceutique, des matériaux de construction, des fluides de forage, polymérisation radicalaire.

Diverses industries, telles que celles mentionnées plus haut, recherchent des agents émulsifiants pour stabiliser des milieux physiques hétérogènes appelés dans la suite de l'exposé " dispersions ".

Au sens de l'invention, une dispersion désigne plus particulièrement un milieu physique hétérogène constitué d'au moins deux phases non miscibles.

Elle peut correspondre par exemple :

- à une émulsion liquide dans liquide, les liquides étant non miscibles l'un dans l'autre, notamment une émulsion huile dans eau, ou une émulsion eau dans huile ;
- à une émulsion multiple constituée par exemple de trois liquides dont au moins deux sont non miscibles entre eux, notamment une émulsion eau dans huile dans eau ou huile dans eau dans huile, les phases eau et huiles pouvant être identiques ou différentes ;
- à une mousse constituée de gaz dispersé dans un liquide ou une émulsion ;
- à une émulsion ou suspension de solide dans un liquide, comme les latex qui correspondent à des suspensions colloïdales de particules de polymères dans une phase liquide ;
- à un système formé d'un gaz et de deux liquides différents.

L'objet de la présente invention s'applique à toute dispersion telle que définie plus haut, et plus particulièrement aux systèmes énumérés de façon non limitative.

A ce stade, il est important de définir le terme "émulsifiant".

Dans le cadre de la présente invention, le terme "émulsifiant" désigne un composé qui abaisse la tension interfaciale entre deux phases non miscibles (par exemple eau/huile) et permet ainsi une forte augmentation de la surface spécifique de la phase à émulsionner. Ainsi, l'énergie mécanique nécessaire pour former la dispersion est diminuée.

Il est important de distinguer la fonction d'émulsification de celle de stabilisation d'émulsion. L'émulsification consiste à protéger l'interface de la coalescence par adsorption d'agents amphiphiles sur ladite interface.

La stabilisation d'émulsion désigne tout phénomène, inhibant la déstabilisation d'une dispersion au sens de l'invention, qui conduirait tôt ou tard à la coalescence des gouttelettes ou à la coagulation des solides dans une dispersion.

Les agents émulsifiants sont en général constitués d'une partie hydrophile et d'une partie hydrophobe. Ils peuvent être anioniques (par exemple dérivés des acides carboxyliques, phosphoriques, sulfuriques, sulfoniques), cationiques (par exemple dérivés de sels d'ammonium quaternaires), nonioniques (dérivés de fonctions alcohols) ou zwitterioniques (dérivés d'acides acyl-aminés). A titre indicatif, nous pouvons citer les mono- et les di-glycérides d'acides gras, les polysorbates, les phospholipides, les lipoprotéines, les sucroglycérides, les esters de saccharoses, les sulfates et phosphates d'acides gras, certaines protéines comme les isolats de soja et certains polysaccharides comme par exemple la gomme arabique. Dans le domaine alimentaire, cosmétique et pharmaceutique, une des agents émulsifiants le plus employé est la gomme arabique qui est un polysaccharide extrait de végétaux supérieurs. Toutefois, pour exercer son pouvoir émulsifiant efficacement, il est nécessaire d'utiliser la gomme arabique à des concentrations élevées. Cette concentration peut atteindre jusqu'à 25% en poids de l'émulsion totale. La gomme arabique présente un autre inconvénient qui est le fait d'être cultivée dans des zones géographiques politiquement instables ce qui peut limiter sa fourniture, et entraîner une variation dans la qualité et le prix de cette gomme.

Le choix d'agent émulsifiant est généralement basé à la fois sur sa disponibilités, sur son coût et sur son aptitude à abaisser rapidement la tension interfaciale et à protéger efficacement l'interface.

Les galactomannanes qui sont aussi des polysaccharides extraits des végétaux supérieurs, paraissent comme des candidats potentiels intéressants.

Les galactomannanes qui sont des polysaccharides non ioniques extraits de l'albumen de graines de légumineuses dont ils constituent le glucide de réserve, sont surtout connus et employés comme agent de texture et notamment pour leurs propriétés viscosantes, épaississantes, stabilisantes, rétentrices d'eau, et filmogènes. Parmi les plus employés, on peut citer la gomme de guar, la gomme de caroube, et la gomme de tara.

Ce sont des macromolécules chimiquement neutres, comportant une chaîne principale constituée d'unités D-mannopyranose liées en position β(1-4) et substituée par des unités D-galactopyranose en position α(1-6).

Les différents galactomannanes se distinguent par la proportion d'unités D-mannopyranose et D-galactopyranose qui sont représentés par leur rapport mannose/galactose (ci-après M/G). Bien que variable d'une espèce à l'autre, le rapports mannose/galactose est de l'ordre de 1 pour le fenugreek, de 2 pour le guar, de 3 pour le tara, et de 4 pour la caroube.

De par leur nature, les galactomannanes sont compatibles avec d'autres composés et donc peuvent être utilisés en association avec ceux-ci pour produire des effets synergiques en terme de texture. Par exemple, la gomme de caroube en association avec la gomme xanthane peut conduire à des gels de différentes forces et de consistances plus ou moins élastiques.

Les galactomannanes natifs sont des polymères fortement hydrophiles qui, à de faibles concentrations, conduisent à des solutions très visqueuses. Cet aspect peut limiter leur utilisation.

A la connaissance de la Demanderesse, à ce jour, aucune propriété émulsifiante satisfaisante correspondant aux critères cités ci-dessus (abaissement de la tension interfaciale et cinétique rapide d'adsorption à l'interface) n'a été mise en évidence pour les galactomannanes.

Or, la Demanderesse a constaté, et ce de manière tout à fait inattendue, que certaines conditions permettent aux galactomannannes d'acquérir un caractère amphiphile et devenir ainsi de bons agents émulsifiants.

Ces mêmes conditions permettent, en outre, d'obtenir un galactomannane dont les propriétés texturantes et en particulier les propriétés épaississantes ou viscosantes peuvent être ajustées.

Ainsi, la présente invention a pour but de fournir de nouveaux agents émulsifiants qui abaissent rapidement et efficacement la tension interfaciale des dispersions.

Un autre but de l'invention est de fournir de nouveaux agents émulsifiants qui soient facilement disponibles.

L'invention a encore pour but de proposer de nouveaux agents émulsifiants de type ci-dessus, qui puisse présenter, en outre, toutes les propriétés requises pour obtenir des formulations notamment dans le domaine de l'alimentaire ou de la cosmétique.

D'autres avantages et caractéristiques de la présente invention apparaîtront clairement à la lecture de la description et les exemples qui vont suivre.

La présente invention a donc pour objet l'utilisation d'au moins un galactomannane dont le rapport entre les motifs mannose/galactose (M/G) est au plus égal à 5 et présente une masse moléculaire comprise entre 2000 et $2.10^6$ g/mole comme agent émulsifiant d'une dispersion.

Dans le cadre de la présente invention, les galactomannanes peuvent être utilisés seuls ou en mélanges. Dans le suite de l'exposé, par le terme " galactomannane " il faut entendre les galactomannanes seuls ou en mélange.

Les galactomannanes sont avantageusement choisis parmi le guar, la caroube, et le tara.

Les galactomannanes présentent plus particulièrement un rapport entre les motifs mannose/galactose (M/G) d'au moins 1, avantageusement d'au moins 1,5, plus avantageusement d'au moins 1,8, et de préférence d'au moins 2.

Le pouvoir émulsifiant des galactomannanes est étroitement lié avec leur masse moléculaire et la cinétique d'abaissement de la tension interfaciale.

Dans le cadre de la présente invention, les galactomannanes présentent une masse moléculaire inférieure à celle des galactomannanes natifs. Elle est avantageusement comprise entre 10 000 et $1,5.10^6$ g/mole, de préférence entre 30 000 et $1.10^6$ g/mole, plus particulièrement entre 50 000 et 500 000 g/mole.

La masse moléculaire en poids peut être mesurée par chromatographie par perméation de gel (GPC).

Éventuellement, elle peut également être déterminée directement par la diffusion de la lumière ou à partir de la viscosité intrinsèque en utilisant un étalonnage selon : "Viscosity-Molecular weight relationships, intrinsic chain flexibility and dynamic solution properties of guar galactomannan" de G. Robinson, S.B. Ross Murphy, E.R. Morris, Carbohydrate Research 107, p. 17-32, 1982.

Le fait d'avoir obtenu des propriétés émulsifiantes pour les galactomannanes à de masses moléculaires inférieures à celles des galactomannanes natifs est d'autant plus surprenant et inattendu que par exemple dans le cas de la gomme arabique, il a été montré que la propriété émulsifiante de cette dernière augmentait avec sa masse moléculaire.

Pour atteindre les masses moléculaires précitées, les galactomannanes natifs peuvent être traités selon l'une des voies ci-après :

- voie oxydative en présence d'alcalin,
- voie basique en présence d'oxygène,
- voie enzymatique, ou
- dépolymérisation acide.

Ces méthodes de dépolymérisation sont connues en soi. On pourra se référer par exemple à :

- EP 0130946 pour le procédé de dépolymérisation oxydative en présence d'alcalin, et pour la voie basique en présence d'oxygène,
- "Novo Enzyme", Novo Industri, AS Denmark, en ce qui concerne la dépolymérisation enzymatique, et
- "Säurehydrolyse glykozidischer Bindungen", Jozsef Szejtli, 1975, VEB Fachbuchverlag, Leipzig, pour la dépolymérisation acide.

Les galactomanannes exercent leur propriété émulsifiante déjà à une quantité aussi faible que 0,1 % en poids par rapport au poids total de la dispersion. En général, les galactomannanes sont présents en une quantité comprise entre 0,1 à 10 % en poids par rapport au poids total de la dispersion. Cette quantité est plus pariculièrement comprise entre 0,1 à 7 %, de préférence entre 0,5 et 5 %, en poids par rapport au poids total de la dispersion.

Le pouvoir émulsifiant est indirectement obtenu par des mesures de tensions superficielles et interfaciales avec une quantité donnée de galactomannane, à l'aide d'un tensiomètre à goutte pendante du type Lauda TVT 1.

Quelle que soit la nature de la dispersion, une quantité en galactomannane aussi basse que 0,5 % en poids par rapport au poids total de la dispersion, peut abaisser la tension superficielle de ladite dispersion de 5 à 35 mN/m, et plus particulièrement de 20 à 30 mN/m.

D'une manière générale, plus l'abaissement de la tension superficielle et la cinétique d'adsorption à l'interface sont importantes et rapides, plus le pouvoir émulsifiant de l'agent émulsifiant est grand.

A titre de comparaison, un abaissement de 25 mN/m est obtenu avec une quantité de gomme arabique d'environ 20 % en poids par rapport au poids total de la dispersion.

Les galactomannanes selon l'invention possèdent des propriétés épaississantes ou viscosantes plus faibles que leurs homologues natifs, ce qui facilité et favorise leur s mises en oeuvre.

Ainsi, à 25°C, une solution aqueuse à 1 % d'une gomme de guar selon l'invention avec une masse moléculaire comprise entre 50 000 et $1,5.10^6$ g/mol, peut présenter une viscosité variant entre 10 et 1000 mPa.s. La viscosité, pour une telle solution, avec un guar natif sera supérieure à 3000 mPa.s.

La viscosité est mesurée à l'aide d'un viscosimètre Brookfield RVT (vitesse de 20 tr/min), à 25°C.

Comme déjà mentionné, les galactomannanes sont tout à fait compatibles avec les autres composés présents dans les formulations en fonction de l'application envisagée, comme par exemple les stabilisants, les gélifiants, les arômes, les agents viscosants, les agents de conservation, et peuvent être employés éventuellement en association avec ceux-ci.

Un autre objet de la présente invention est l'utilisation d'au moins un galactomannane selon l'invention comme agent émulsifiant, dans des compositions destinées aux domaines de la cosmétique, de l'alimentaire, de l'agrochimie, des formulations industrielles, de la détergence, pharmaceutique, des matériaux de construction, des fluides de forage, polymérisation radicalaire.

Des exemples concrets mais non limitatifs de l'invention vont maintenant être présentés.

**Légende des figures :**

La figure 1 représente la cinétique d'adsorption à l'interface eau/air d'un guar selon l'invention comparée à celle de la gomme arabique, dans une formulation de boisson de type soda

Les figures 2 et 3 représentent la répartition granulométrique en volume de la taille des gouttelettes des différentes émulsions préparées avec des guars, selon l'invention, et de la gomme arabique, respectivement, à différents temps de vieillissement. Cette répartition granulométique est réalisée avec un granulomètre laser HORIBA LA 910.

**EXEMPLES**

**Exemple 1 : Préparation de la gomme de guar selon l'invention**

Cet exemple peut être réalisé soit avec de la farine de guar natif comme par exemple le Meyroguar200/50F commercialisé par la société Rhodia, soit avec des splits de guar natif de type Triple Purified Splits commercialisés par la société Hindustan Gum.

La transformation de splits en farine se fait de manière connue en soi, comme des procédés classiques de meunerie utilisés pour le guar.

Dans un réacteur de type Lödige ou Drais de 2000 litres, on introduit 1 tonne de poudre de guar natif (Meyroguar 200/50F). A cela, on ajoute 100 ml d'une solution à 30% de soude. Le mélange est agité et porté à 70°C.

Une solution aqueuse de peroxyde d'hydrogène à 30% est ajoutée au mélange pendant 30 min à 2 heures, sous agitation, en une quantité telle que le guar résultant, en solution à 1% et à 25°C, présente une viscosité comprise entre 800 et 1200 mPa.s.

Selon l'application finale, le mélange réactionnel peut éventuellement être neutralisé à l'aide d'une solution aqueuse d'acide acétique ou d'acide phosphorique.

Le guar récupéré est ensuite séché dans un broyeur de type moulin à marteau ou moulin à aiguille de manière à obtenir une poudre fine dont la teneur en eau est comprise entre 8 et 12%.

Le guar ainsi obtenu présente une masse moléculaire d'environ $1,2.10^6$ g/l, déterminée par chromatographie par perméation de gel (GPC).

Il est à noter qu'en jouant sur les quantités de peroxyde d'hydrogène ajoutées ainsi que le temps de séjour du mélange réactionnel dans le réacteur, on peut moduler la masse moléculaire du guar final.

Ainsi, pour obtenir un guar de masse moléculaire d'environ 50000 g/mole, le temps de séjour du mélange réactionnel dans le réacteur en présence de peroxyde d'hydrogène est d'environ 3 à 4 heures.

### Exemple 2 : Propriétés émulsifiantes de guars et de caroubes selon l'invention

Le but de cet exemple est de mettre en évidence les propriétés émulsifiantes de certains guars et caroubes préparés selon l'enseignement de l'exemple 1, en termes d'abaissement et de cinétique d'abaissement de la tension superficielle (interface eau/air) ou tension interfaciale (interface eau/huile) des dispersions.

Mode opératoire pour la préparation d'une solution à 0,5 % de galactomannane:

On pèse 200 ml d'eau distillée dans un bécher de 600ml. On agite à 400 tr/min avec une pale défloculeuse de diamètre 55 mm. Le galactomannane selon l'invention est versé rapidement (environ 20 secondes) dans le bêcher. On agite 15 min à 1000 tr/min.

Le principe de la mesure de la tension superficielle et interfaciale :

La tension superficielle ou interfaciale entre un liquide et l'air ambiant ( tension superficielle) ou deux liquides (tension interfaciale) est déterminée par la méthode de la goutte tombante.

Cette méthode consiste à augmenter le volume de la goutte jusqu'à l'obtention d'une valeur critique où la force due à la tension interfaciale ne peut plus contrebalancer la force de pesanteur de cette goutte.

La tension superficielle ou interfaciale peut être calculée par la formule suivante :

$$F = mg = 2\pi r \gamma f$$

$$V \Delta \rho g = 2\pi r \gamma f$$

$$\boxed{\gamma = \frac{V \Delta \rho g}{2 \pi r f}}$$

Dans cette formule :

- F représente la force (en N)
- m représente la masse de la goutte (en kg)
- g représente la pesanteur (N/kg)
- r représente le rayon de la canule
- $\gamma$ représente la tension superficielle ou interfaciale (en N/m)
- f représente un facteur multiplicatif de correction pour le rayon de la canule
- V correspond au volume de la goutte (en $m^3$)
- $\Delta\rho$ correspond à la différence de densité entre soit air/eau s'il s'agit d'une tension superficicielle soit eau/huile s'il s'agit d'une tension interfaciale (kg/$m^3$).

La tension $\gamma$ est ainsi déterminée avec une précision de l'ordre de 0,1 mN/m.

La tension superficielle ou interfaciale γ, ne dépend ni du temps nécessaire pour la chute de la goutte, ni de la viscosité de la solution de galactomannane.

Les réultats sont récapitulés dans les tableaux I et II.

Tableau I :

| Tension superficielle (Interface Eau / air) | |
|---|---|
| **Produits** | **Tension superficielle à 23°C (mN/m)** |
| Eau distillée | 72,8 |
| Guar natif (solution à 0,5%) (masse moléculaire = 2,5 $10^6$ g/mole) | 55 |
| Guar A (solution à 0,5%)[(*)] (masse moléculaire = 50000 g/mole) | 43 |
| Guar B (solution à 0,5%)[(*)] (masse moléculaire = 250000 g/mole) | 43 |
| Guar C (solution à 0,5%) [(*)] (masse moléculaire = 1,5 $10^6$ g/mole) | 50 |
| Caroube native (solution à 0,5%)[(*)] (masse moléculaire = 1.$10^6$ g/mole) | 55 |
| Caroube A (solution à 0,5%) [(*)] (masse moléculaire = 100000 g/mole) | 37 |
| gomme arabique (solution à 0,5%) | 54 |
| gomme arabique (solution à 20%) | 38 |

[(*)] selon la présente invention

Tableau II :

| Tension interfaciale: (Interface Eau / huile) | | | | |
|---|---|---|---|---|
| **Produits** | **Hexadecane** | **Soja** | **Tournesol** | **Colza** |
| Eau distillée | 41,9 | 19,3 | 18,9 | 13,2 |
| Guar A (solution à 0,5%) (*) (masse moléculaire = 50000 g/mole) | 21,4 | 13,0 | 12,5 | 6,2 |
| Guar B (solution à 0,5%) (*) (masse moléculaire = 250000 g/mole) | 21,7 | 14,0 | 12,3 | 6,5 |
| Guar (solution à 0,5%) (*) (masse moléculaire = 1.5 $10^6$ g/mole) | 22,5 | 14,3 | 12,8 | 8,0 |
| gomme arabique (solution à 0.5%) | 25 | 15,5 | | |

(*) selon la présente invention

Ainsi, il apparaît clairement que les galactomannanes selon l'invention sont tout à fait comparables du point de vue tension superficielle et interfaciale avec la gomme arabique, et ce à des concentrations bien plus faibles que dans le cas de la gomme arabique.

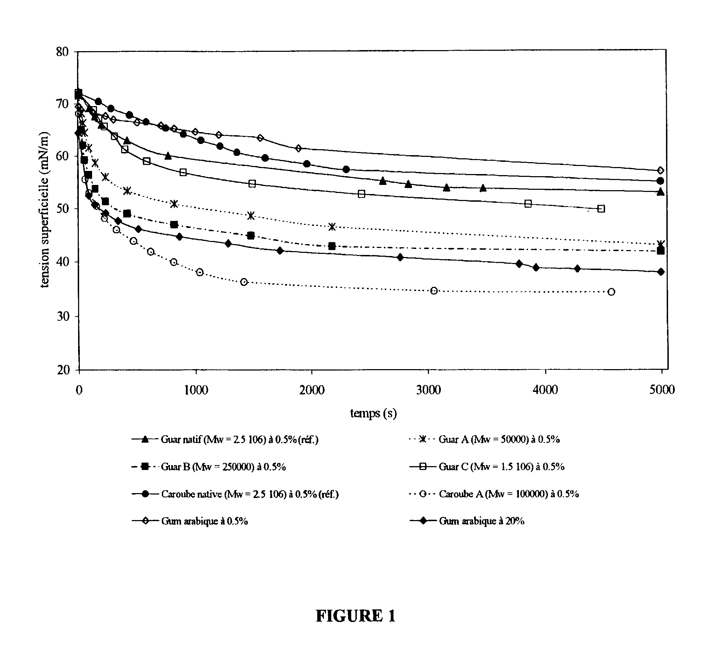

La figure 1 qui représente la cinétique d'adsorption à l'interface eau/air d'un guar selon l'invention comparée à celle de la gomme arabique, dans une formulation de boisson de type soda, montre la supériorité des galactomannanes selon l'invention en terme de cinétique d'émulsification, par rapport à la gomme arabique.

## Exemple 3 : Formulation d'émulsions huile dans eau

Une émulsion huile dans eau de composition suivante a été préparée en mélangeant à l'aide d'un Ultraturrax ( vitesse de 8000 tr/min pendant 15 min ) la phase huile et la phase eau ;

- 20% d'huile de colza en poids par rapport au poids total de l'émulsion
- 80% en poids par rapport au poids total de l'émulsion d'une solution aqueuse à 2 % de guar préparé selon l'enseignement de l'exemple 1 (guar de masse moléculaire d'environ 50 000 g/mole).

L'émulsion obtenue est stable, les gouttelettes d'huile présentent un diamètre moyen de 10 μm.

## Exemple 4 : Utilisation de guar selon l'invention dans une formulation de boisson de type soda

Cet exemple décrit la préparation d'une émulsion d'huile essentielle d'orange dans l'eau émulsifiée par 25% poids/poids de gomme arabique, en comparaison d'une émulsion similaire, mais émulsifiée par 5% poids/poids de guar de masse moléculaire égale à 50 000 g/mole .

Composition à base de guar selon l'invention :

- ☐ Huile essentielle        5% en poids
- ☐ Guar de masse moléculaire 50 000        5 % en poids
- ☐ Benzoate de sodium        0, 05 % en poids
- ☐ Acide citrique        0,08 % (pH 4) en poids
- ☐ Eau distillée pour compléter à 100

Composition à base de gomme arabique :

- ☐ Huile essentielle        5% en poids
- ☐ Gomme arabique        25 % en poids
- ☐ Benzoate de sodium        0, 05 % en poids
- ☐ Acide citrique        0,08 % (pH 4) en poids
- ☐ Eau distillée pour compléter à 100

Mode opératoire :

Le galactomannane (ou le cas échéant la gomme arabique) est ajouté dans l'eau. Le mélange est agité à 800 tr/min. pendant 20 min. à l'aide d'une pale défloculeuse et est porté à 40°C

A ce mélange sont ajoutés l'acide citrique et le benzoate. On laisse le tout revenir à température ambiante.

L'huile est alors ajoutée et l'émulsion résultante est agité à 800 tr/min. pendant 15 min. à 60°C. L'émulsion est ensuite refroidie à température ambiante et homogénéisée en deus étapes à 250 bar.

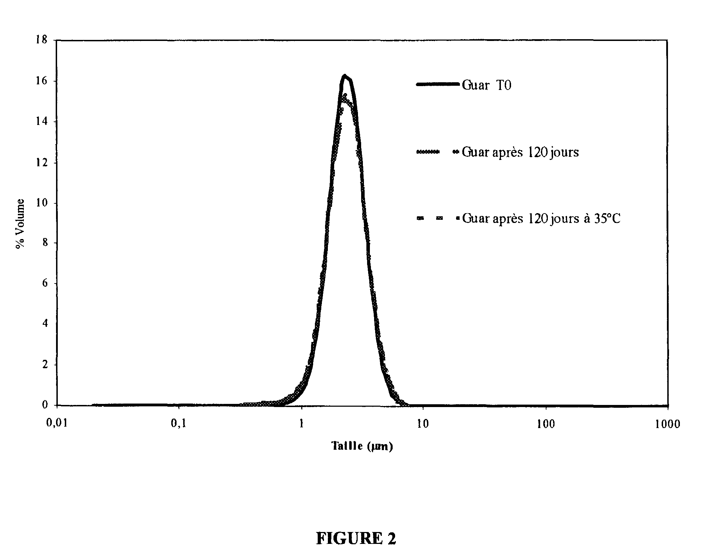

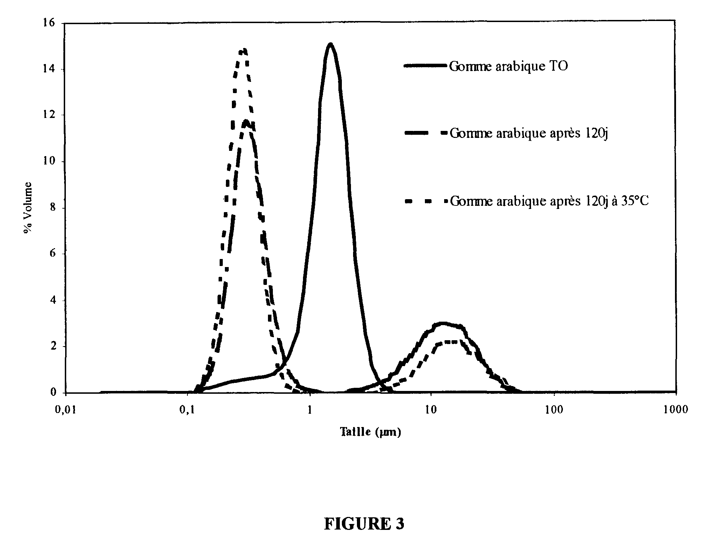

Une répartition granulométrique en volume de la taille des gouttelettes des émulsions a été réalisée avec un granulomètre laser HORIBA LA 910 (figures 2 et 3).

On constate que la granulométrie des deux émulsions est très proche (autour de 2 microns) mais que la stabilité de l'émulsion avec le guar est meilleure (figure 2), car l'émulsion réalisée avec la gomme arabique évolue au cours de temps (diminution de la taille des gouttelettes et apparition d'une deuxième population de granulométrie plus élevée) - figure 3.

## Exemple 5 : Utilisation de guar selon l'invention dans une formulation de crème glacée

Le but de cet exemple est de montrer que le pouvoir émulsifiant d'un guar selon l'invention est tout à fait comparable à celui des agents émulsifiants habituels utilisés dans ce domaine.

Pour cela, deux formulations de crème glacée ont été préparées selon deux recettes identiques en tout point sauf la nature de l'agent émulsifiant.

Dans la recette A, l'émulsifiant utilisé est un mélange de 40% de mono- et 60% de di-glycérides.

Dans la recette B l'émulsifiant employé est un guar préparé selon l'enseignement de l'exemple 1, qui est un guar avec une masse moléculaire de 50 000 g/mole.

Les crèmes glacées ont été préparées suivant le procédé classique :

1) on chauffe l'eau et la poudre de lait écrémé à 60°C sous agitation 1400 tr/min ;
2) on ajoute les matières grasses du beurre de préférence fondues, la gomme de guar et la gomme de caroube natives, et l'émulsifiant, le saccharose et le sirop de glucose ;
3) on chauffe à 65°C sous agitation à 1400 tr/min ;
4) on laisse reposer 15 min à 65°C
5) on chauffe d'abord à 72°C puis on homogénéise en deux étapes : la première à 160 bar et la deuxième à 40 bar ;
6) on pasteurise 4 sec à 87°C ;
7) on refroidit à 4°C ;
8) on laisse maturer à 4°C au moins pendant 4 heures ;
9) on congèle de façon continue à jusqu'à obtenir un foisonnement de 120%.

*Recette A :*

| Ingrédients | % en poids par rapport au poids total de l'émulsion |
|---|---|
| Saccharose | 12 |
| Sirop de glucose 42 % DE | 8 |
| Poudre de lait écrémé | 10 |
| Matière grasse du beurre | 8 |
| Caroube | 0,1 |
| Guar natif | 0,1 |
| Mélange de 40% de mono- et 60% de di- glycérides. | 0,5 |
| Eau | q.s.P. 100 |

Recette B :

| Ingrédients | % en poids par rapport au poids total de l'émulsion |
|---|---|
| Saccharose | 12 |
| Sirop de glucose 42 % DE | 8 |
| Poudre de lait écrémé | 10 |
| Matière grasse du beurre | 8 |
| Caroube | 0,1 |
| Guar natif | 0,1 |
| Guar de masse moléculaire 50000g/mol | 0,5 |
| Eau | q.s.P. 100 |

Caractérisation des formulations F(A) et F(B) avant congélation

| Formulation | Viscosité* (mPa.s) | pH | Extrait sec (%) |
|---|---|---|---|
| F(A) | 300 | 6,5 | 35 |
| F (B) | 500 | 6,5 | 36 |

*La viscosité est mesurée à l'aide d'un viscosimètre Brookfield RVT (vitesse de 20 tr/min), à 4°C.

Caractérisation des formulations F(A) et F(B) après congélation : Test de la stabilité de la crème glacée à 18°C (test de fonte)

Le test de la stabilité de la crème glacée à 18°C aussi appelé test de fonte permet de mesurer l'apparition de la première goutte de crème glacée après un temps t.

Pour cela, on met une boule de crème glacée sur un tamis et on enregistre l'évolution de la boule à 18°C, au cours du temps.

La première mesure est prise dès l'apparition de la première goutte de crème glacée.

| Formulation | Temps (min.) nécessaire pour l'apparition de la première goutte |
|---|---|
| F(A) | 25 |
| F(B) | 28 |

Cet exemple montre bien que le guar selon l'invention, permet de remplacer efficaement les agents émulsifiants classiques qui sont les mélanges de mono- et de di-glycérides.

La texture et les propriétés organoléptiques de la crème glacée sont en tout point comparable à celles obtenues avec le mélanges de mono- et de di-glycérides précité.

**Revendications**

1. Utilisation d'au moins un galactomannane dont le rapport entre les motifs mannose/galactose (M/G) est au plus égal à 5 et présente une masse moléculaire comprise entre 2000 et $2.10^6$ g/mole comme agent émulsifiant d'une dispersion.

2. Utilisation selon la revendication 1, **caractérisé en ce que** la dispersion est une émulsion liquide dans liquide.

3. Utilisation selon la revendication 2, **caractérisé en ce que** la dispersion est une émulsion eau dans huile.

4. Utilisation selon la revendication 2, **caractérisé en ce que** la dispersion est une émulsion huile dans eau.

5. Utilisation selon la revendication 1, **caractérisé en ce que** la dispersion est une émulsion multiple constituée de trois liquides.

6. Utilisation selon la revendication 1, **caractérisé en ce que** la dispersion est une mousse constituée de gaz dispersé dans un liquide ou une émulsion.

7. Utilisation selon la revendication 1, **caractérisé en ce que** la dispersion est une suspension de solide dans liquide.

8. Utilisation selon la revendication 1, **caractérisée en ce que** la dispersion est formée d'un gaz et de deux liquides différents.

9. Utilisation selon l'une quelconque des revendications 1 à 8, **caractérisé en ce que** le galactomannane présente un rapport entre motifs mannose/galactose (M/G) d'au moins 1, avantageusement d'au moins 1,5, plus avantageusement d'au moins 1,8, et de préférence d'au moins 2.

10. Utilisation selon l'une quelconque des revendications 1 à 9, **caractérisé en ce que** le galactomannane présente une masse moléculaire comprise entre 10 000 et $1,5.10^6$ g/mole, de préférence entre 30 000 et $1.10^6$ g/mol, plus particulièrement entre 50 000 et 500 000 g/mol.

11. Utilisation selon l'une quelconque des revendications 1 à 10, **caractérisé en ce que** le galactomannane est présent dans la dispersion en une quantité comprise entre 0,1 à 10 % en poids par rapport au poids total de la dispersion.

12. Utilisation selon l'une quelconque des revendications 1 à 11, **caractérisé en ce que** le galactomannane est présent dans la dispersion en une quantité comprise entre 0,1 à 7 %, de préférence entre 0,5 et 5 %, en poids par rapport au poids total de la dispersion.

13. Utilisation selon l'une quelconque des revendications 1 à 12, **caractérisée en ce qu'**une quantité de galactomananne de 0,5 % en poids par rapport au poids total de la dispersion, peut abaisser la tension superficielle de ladite dispersion de 5 à 35 mN/m, et plus particulièrement de 20 à 30 mN/m.

14. Utilisation d'au moins un galactomannane selon l'une quelconque des revendications 1 à 13 comme agent émulsifiant dans une composition destinée aux domaines de la cosmétique, de l'alimentaire, de l'agrochimie, des formulations industrielles, de la détergence, pharmaceutique, des matériaux de construction, des fluides de forage, polymérisation radicalaire.

**Patentansprüche**

1. Verwendung wenigstens eines Galactomannans, bei welchem das Verhältnis zwischen den Mannose-/Galactose-Motiven (M/G) höchstens gleich 5 ist und welches eine Molekülmasse aufweist, die zwischen 2.000 und $2 \cdot 106$ g/mol liegt, als Emulgator einer Dispersion.

2. Verwendung nach Anspruch 1, **dadurch gekennzeichnet, dass** die Dispersion eine Emulsion einer Flüssigkeit in einer Flüssigkeit ist.

3. Verwendung nach Anspruch 2, **dadurch gekennzeichnet, dass** die Dispersion eine Wasser-in-Öl-Emulsion ist.

4. Verwendung nach Anspruch 2, **dadurch gekennzeichnet, dass** die Dispersion eine Öl-in-Wasser-Emulsion ist.

5. Verwendung nach Anspruch 1, **dadurch gekennzeichnet, dass** die Dispersion eine Mehrfachemulsion ist, die aus drei Flüssigkeiten gebildet wird.

6. Verwendung nach Anspruch 1, **dadurch gekennzeichnet, dass** die Dispersion ein Schaum ist, welcher aus Gas, das in einer Flüssigkeit oder einer Emulsion dispergiert ist, gebildet wird.

7. Verwendung nach Anspruch 1, **dadurch gekennzeichnet, dass** die Dispersion eine Suspension eines Feststoffes in einer Flüssigkeit ist.

8. Verwendung nach Anspruch 1, **dadurch gekennzeichnet, dass** die Dispersion aus einem Gas und zwei unterschiedlichen Flüssigkeiten gebildet wird.

9. Verwendung nach irgendeinem der Ansprüche 1 bis 8, **dadurch gekennzeichnet, dass** das Galactomannan ein Verhältnis zwischen den Mannose-/Galactose-Motiven (M/G) von wenigstens 1, vorzugsweise wenigstens 1,5, insbesondere wenigstens 1,8 und besonders bevorzugt wenigstens 2 aufweist.

10. Verwendung nach irgendeinem der Ansprüche 1 bis 9, **dadurch gekennzeichnet, dass** das Galactomannan eine Molekülmasse aufweist, die zwischen 10.000 und $1,5 \, 10^6$ g/mol, vorzugsweise zwischen 30.000 und $1 \cdot 10^6$ g/mol, insbesondere zwischen 50.000 und 500.000 g/mol liegt.

11. Verwendung nach irgendeinem der Ansprüche 1 bis 10, **dadurch gekennzeichnet, dass** das Galactomannan in der Dispersion in einer Menge vorliegt, die zwischen 0,1 bis 10 Gew.-% bezogen auf das Gesamtgewicht der Dispersion umfasst.

12. Verwendung nach irgendeinem der Ansprüche 1 bis 11, **dadurch gekennzeichnet, dass** das Galactomannan in der Dispersion in einer Menge vorliegt, die zwischen 0,1 bis 7 %, vorzugsweise zwischen 0,5 und 5 % des Gewichts bezogen auf das Gesamtgewicht der Dispersion umfasst.

13. Verwendung nach irgendeinem der Ansprüche 1 bis 12, **dadurch gekennzeichnet, dass** eine Menge des Galactomannans von 0,5 Gew.-% bezogen auf das Gesamtgewicht der Dispersion die Oberflächenspannung der genannten Dispersion um 5 bis 35 mN/m und insbesondere um 20 bis 30 mN/m erniedrigen kann.

14. Verwendung wenigstens eines Galactomannans nach irgendeinem der Ansprüche 1 bis 13 als Emulgator in einer Zusammensetzung, welche für die Bereiche der Kosmetik, der Nahrungsmittel, der Agrochemie, der gewerblichen Formulierungen, der Detergenzien, der Pharmazie, der Baumaterialien, der Bohrflüssigkeiten, der radikalischen Polymerisation gedacht ist.

**Claims**

1.  Use, as a dispersion emulsifying agent, of at least one galactomannan having a mannose/galactose moiety ratio (M/G) of at most 5 and having a molecular mass in the range 2000 to $2 \times 10^6$ g/mole.

2.  Use according to claim 1, **characterized in that** the dispersion is a liquid-in-liquid emulsion.

3.  Use according to claim 2, **characterized in that** the dispersion is a water-in-oil emulsion.

4.  Use according to claim 2, **characterized in that** the dispersion is an oil-in-water emulsion.

5.  Use according to claim 1, **characterized in that** the dispersion is a multiple emulsion constituted by three liquids.

6.  Use according to claim 1, **characterized in that** the dispersion is a foam constituted by gas dispersed in a liquid or an emulsion.

7.  Use according to claim 1, **characterized in that** the dispersion is a suspension of a solid in a liquid.

8.  Use according to claim 1, **characterized in that** the dispersion is formed from a gas and two different liquids.

9.  Use according to any one of claims 1 to 8, **characterized in that** the galactomannan has a mannose/galactose moiety ratio (M/G) of at least 1, advantageously at least 1.5, more advantageously at least 1.8, and preferably at least 2.

10. Use according to any one of claims 1 to 9, **characterized in that** the galactomannan has a molecular mass in the range 10000 to $1.5 \times 10^6$ g/mole, preferably in the range 30000 to $1 \times 10^6$ g/mole, more particularly in the range 50000 to 500000 g/mole.

11. Use according to any one of claims 1 to 10, **characterized in that** the galactomannan is present in the dispersion in a quantity in the range 0.1% to 10% by weight with respect to the total dispersion weight.

12. Use according to any one of claims 1 to 11, **characterized in that** the galactomannan is present in the dispersion in a quantity in the range 0.1% to 7%, preferably in the range 0.5% to 5% by weight with respect to the total dispersion weight.

13. Use according to any one of claims 1 to 12, **characterized in that** a quantity of galactomannan of 0.5% by weight with respect to the total dispersion weight can reduce the surface tension of said dispersion by 5 to 35 mN/m, more particularly by 20 to 30 mN/m.

14. Use of at least one galactomannan according to any one of claims 1 to 13 as an emulsifying agent in a composition intended for the cosmetics, foodstuffs, agrochemicals, industrial formulations, detergents, pharmaceuticals, construction materials, drilling fluids or radical polymerization fields.

FIGURE 1

**FIGURE 2**

**FIGURE 3**